# EUROPÄISCHE PATENTSCHRIFT

(11) **EP 0 653 334 B1**
(45) Veröffentlichungstag und Bekanntmachung des Hinweises auf die Patenterteilung: **12.03.1997**
(21) Anmeldenummer: 94117251.2
(22) Anmeldetag: 02.11.1994
(51) Int. Cl.: B60R 21/20

(54) **Airbag-Gehäuse und dessen Befestigung**
Airbag container and fastening thereof
Boîtier pour coussin d'air et son montage

(30) Priorität: 12.11.1993 DE 4338666
(43) Veröffentlichungstag der Anmeldung: 17.05.1995
(73) Patentinhaber: ADAM OPEL AG, 65423 Rüsselsheim (DE)
(72) Erfinder: Klenk, Jürgen, Dipl.-Ing., D-65468 Geinsheim (DE); Rick, Ulrich, Dipl.-Ing, D-55595 Roxheim (DE)
(74) Vertreter: Kümpfel, Heinz, Dipl.-Ing.

(56) Entgegenhaltungen:
- DE-C- 3 519 724
- US-A- 5 087 067
- US-A- 5 209 519

## Beschreibung

Die Erfindung betrifft ein Airbag-Gehäuse, insbesondere ein Gehäuse für einen Beifahrer-Airbag, sowie dessen Befestigung an einem der Fahrzeugstruktur zugehörenden Querträger unterhalb der Armaturentafel eines Kraftfahrzeuges. Siehe z. B. DE-C-3 519 724 und US-A-5 087 067.

Gehäuse für Beifahrer-Airbags bestehen im allgemeinen aus einem länglichen quer zur Fahrzeuglängsachse angeordneten Behälter, in dem ein Gasgenerator sowie ein gefalteter Luftsack enthalten sind. Diese Airbag-Gehäuse sind üblicherweise aus Metall, nämlich entweder aus umgeformten Blechteilen oder aus stranggepreßtem Metall hergestellt. Es ist auch bekannt, Airbag-Gehäuse aus armiertem Kunststoff herzustellen. Bei diesen Airbag-Gehäusen sind seitlich an dem Behälter Trägerteile durch Schrauben oder durch Schweißen befestigt, die ihrerseits an der Fahrzeugstruktur des Kraftfahrzeuges mittels Schrauben befestigt sind. Damit gelingt es zwar, das Airbag-Gehäuse stabil und lagegerecht unterhalb der Armaturentafel zu haltern. Die Befestigung selbst ist jedoch material- und zeitaufwendig.

Aufgabe der Erfindung ist es, ein Airbag-Gehäuse der genannten Gattung zu schaffen, welches mit geringem Aufwand, jedoch ebenso stabil und lagegenau wie bekannte Airbag-Gehäuse an einem Strukturquerträger des Kraftfahrzeuges zu befestigen ist.

Erfindungsgemäß wird diese Aufgabe dadurch gelöst, daß das Gehäuse an seiner Bodenseite mit mindestens einem zu einer nach oben weisenden Fläche des Querträgers ragenden Gehäuseträger sowie mit einer sich nach unten, Vorzugsweise etwa senkrecht nach unten erstreckenden und am unteren Bereich des Querträgers anliegenden Anlagefläche versehen ist, der Träger mit einem oder mehreren hakenartigen Zapfen zum Eingreifen in Öffnungen in der nach oben weisenden Fläche des Querträgers ausgebildet und die Anlagefläche des Gehäuses mit dem unteren Bereich des Querträgers verbindbar ist.

Ein solches Airbag-Gehäuse ist vorteilhafterweise in einem Urform-Verfahren, insbesondere durch Spritzgießen, in einem Stück hergestellt.

Als Werkstoff für ein derartiges Airbag-Gehäuse eignet sich besonders eine gießbare Leichtmetallegierung oder ein spritzgußfähiger Kunststoff, der zur Erhöhung der Festigkeit auch mit Füllstoffen versehen sein kann.

Vorteilhafterweise ist zwischen der mit dem hakenartigen Zapfen auf dem Querträger aufliegenden Partie des Trägers am Gehäuse und dem Querträger der Fahrzeugstruktur eine elastische Zwischenlage vorgesehen.

Es kann vorteilhaft sein, auch zwischen dem Querträger und der anliegenden Fläche des Gehäuses eine elastische Zwischenlage vorzusehen.

Die elastischen Zwischenlagen sind vorteilhafterweise mit dem Gehäuse in an sich bekannter Weise, z. B. durch Einklipsen, formschlüssig verbunden.

Ein Ausführungsbeispiel der Erfindung ist nachstehend anhand von Zeichnungen näher beschrieben. Es zeigen
- Fig. 1:: eine Draufsicht auf ein erfindungsgemäßes Airbag-Gehäuse;
- Fig. 2:: eine Seitenansicht des Airbag-Gehäuses nach Figur 1 im Schnitt, wobei oberhalb der Mittellinie ein Schnittverlauf entlang der Linie A-A in Figur 1 und unterhalb der Mittellinie ein Schnittverlauf entlang der Linie B-B in Figur 1 dargestellt ist.

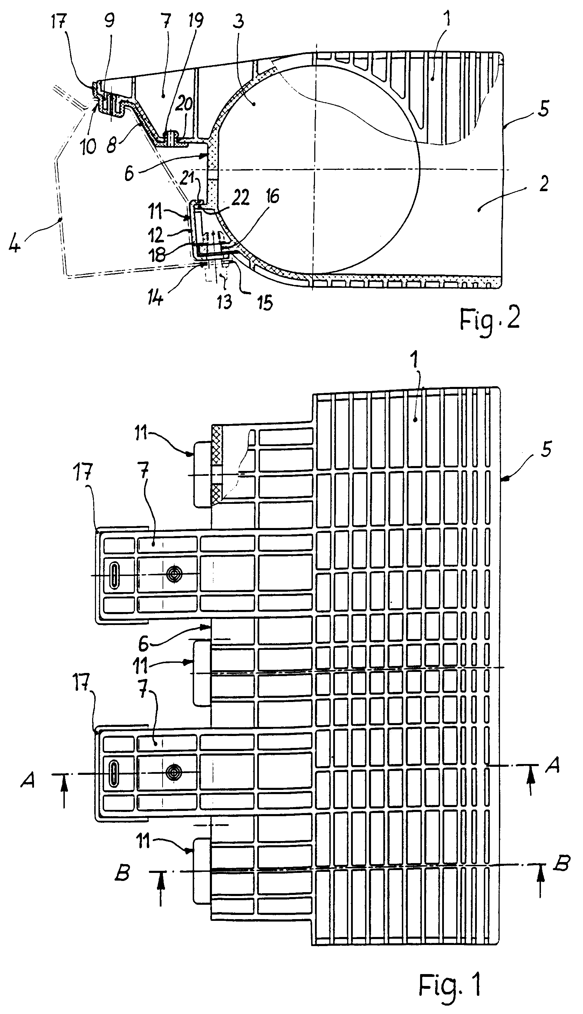

Ein Gehäuse 1 umschließt einen Raum 2 für die Aufnahme eines zusammengefalteten Airbags sowie einen Raum 3 für die Aufnahme eines Gasgenerators zum Aufblasen des Airbags. Das Gehäuse 1 hat die für Beifahrer-Airbag-Gehäuse übliche rechteckige Querschnittsform mit einer in Querrichtung des Fahrzeuges langen und einer in Hochrichtung kurzen Erstreckung. Das Gehäuse 1 ist angeordnet zwischen einem mit der Fahrzeugstruktur fest verbundenen Querträger 4 (in Figur 2 strichpunktiert dargestellt) und einer Armaturentafel, welche aus der Sicht des Fahrzeuginnenraumes das Airbag-Gehäuse 1 verdeckt und lediglich bei Aktivierung des Airbags einen Durchtritt für den sich entfaltenden Airbag freigibt. Die offene Seite 5 des Gehäuses 1 ist zu der Armaturentafel hin gerichtet, während die geschlossene Bodenseite 6 dem Querträger 4 zugewandt ist. Am oberen Bereich der Bodenseite 6 des Gehäuses 1 sind zwei Träger 7 angeformt, die sich zu einer nach oben weisenden Fläche 8 des Querträgers 4 hin erstrecken und auf dieser aufliegen. An den Trägern 7 ist jeweils ein Zapfen 9 angeformt, welcher in eine entsprechende Öffnung 10 in der Fläche 8 des Querträger 4 hakenartig eingreift. Am unteren Bereich der Bodenseite 6 des Gehäuses 1 sind Anlageflächen 11 vorgesehen, die sich an einer senkrecht verlaufenden Fläche 12 des Querträgers 4 abstützen. Nahe der Anlageflächen 11 ist das Gehäuse 1 mittels Schrauben 13 an dem Querträger 4 befestigt. Die Anzugsrichtung der Schrauben 13 verläuft annähernd in gleicher Richtung wie die Einhakrichtung der Zapfen 9 an den Trägern 7. Dazu ist am Querträger 4 ein mit Schraubendurchtrittslöchern 14 versehener Flansch 15 vorgesehen und annähernd parallel zu den Anlageflächen 11 sind im Gehäuse 1 Gewindelöcher 16 angebracht, die z. B. von Einlegemuttern gebildet sein können. Zwischen den Trägern 7 sowie den an den Trägern 7 angeformten Zapfen 9 einerseits und dem Querträger 4 andererseits ist jeweils eine elastische Zwischenlage 17, die vorzugsweise aus einem gummielastischen Werkstoff besteht, angeordnet. Auch zwischen der senkrecht verlaufenden Fläche 12 des Querträgers 4 und den Anlageflächen 11 des Gehäuses 1 sowie zwischen dem Flansch 15 des Querträgers 4 und dem Gehäuse 1 ist beim vorliegenden Ausführungsbeispiel eine elastische Zwischenlage 18 vorgesehen.

Das Gehäuse 1 kann zusammen mit den Trägern 7 und den daran befindlichen Zapfen 9 aus einem Teil durch Spritzgießen gefertigt sein, wobei als Werkstoff z. B. ein faserverstärkter Kunststoff oder auch eine Leichmetallegierung ausreichender Festigkeit geeignet sind. Die Zwischenlagen 17 und 18 aus gummielastischem Werkstoff sind in an sich bekannter Weise mit dem Gehäuse 1 durch Formschluß verbunden, indem sie z. B. mit pilzförmigen Zapfen 19 in Öffnungen 20 gedrückt werden oder mit einem Rand 21 über Kanten 22 des Gehäuses 1 greifen.

Ein derartiges Airbag-Gehäuse 1 kann sowohl bei der Erstmontage als auch bei der im Reparaturfall erforderlichen Zweitmontage mit einem einzigen Griff gegenüber dem Querträger 4 fixiert werden, indem es mittels der Zapfen 9, die sich an den Trägern 7 befinden, in die Öffnungen 10 des Querträgers 4 eingehängt wird. Die endgültige Befestigung erfolgt durch die Schrauben 13. Es bedarf daher keinerlei Zugänglichkeit von oben her, um das Airbag-Gehäuse 1 unterhalb einer Armaturentafel befestigen zu können. Infolge der unmittelbaren Befestigung an dem Querträger 4, der bei modernen Automobilen zur Versteifung des Vorderbaues und zur Abstützung der A-Säulen ohnehin erforderlich ist, kann das Airbag-Gehäuse 1 auch optimal die beim Aktivieren des Airbags auftretenden Kräfte auf die Fahrzeugstruktur weiterleiten.

Die Zwischenlagen 17 und 18 überbrücken Toleranzen und entkoppeln das Airbag-Gehäuse 1 von den Schwingungen des übrigen Fahrzeugaufbaues, so daß die Lebensdauer des Airbags insgesamt verlängert wird.

Der besondere Vorteil der Erfindung besteht somit darin, ein Airbag-Gehäuse ohne zusätzlich anbringbare Halteteile stabil und schnell allein von unten her an einem Querträger befestigen zu können.

## Patentansprüche

1. Airbag-Gehäuse, insbesondere ein Gehäuse für einen Beifahrer-Airbag, sowie dessen Befestigung an einem der Fahrzeugstruktur zugeordneten Querträger unterhalb der Armaturentafel eines Kraftfahrzeuges, **dadurch gekennzeichnet,** daß das Gehäuse (1) an seiner Bodenseite (6) mit mindestens einem zu einer nach oben weisenden Fläche (8) des Querträgers (4) ragenden Gehäuseträger (7) sowie mit einer sich nach unten, Vorzugsweise etwa senkrecht nach unten erstreckenden und am unteren Bereich des Querträgers (4) anliegenden Anlagefläche (11) versehen ist, der Träger (7) mit einem oder mehreren hakenartigen Zapfen (9) zum Eingreifen in Öffnungen (10) in der nach oben weisenden Fläche (8) des Querträger (4) ausgebildet und die Anlagefläche (11) des Gehäuses (1) mit dem unteren Bereich des Querträgers (4) verbindbar ist.

2. Airbag-Gehäuse nach Anspruch 1, **dadurch gekennzeichnet,** daß es durch Spritzgießen in einem Stück hergestellt ist.

3. Airbag-Gehäuse nach Anspruch 2, **dadurch gekennzeichnet,** daß als Werkstoff eine gießbare Leichtmetallegierung Verwendung findet.

4. Airbag-Gehäuse nach Anspruch 2, **dadurch gekennzeichnet,** daß als Werkstoff ein spritzgußfähiger Kunststoff Verwendung findet.

5. Airbag-Gehäuse nach Anspruch 4, **dadurch gekennzeichnet,** daß der als Werkstoff verwendete Kunststoff in an sich bekannter Weise mit Füllstoffen versehen ist.

6. Airbag-Gehäuse nach Anspruch 1 und 2 sowie einem oder mehreren der Ansprüche 3 bis 5, **dadurch gekennzeichnet,** daß zwischen der mit hakenartigen Zapfen (9) auf dem Querträger (4) aufliegenden Partie des Trägers (7) am Gehäuse (1) und dem Querträger (4) der Fahrzeugstruktur eine elastische Zwischenlage (17) vorgesehen ist.

7. Airbag-Gehäuse nach Anspruch 1, 2 und 6, **dadurch gekennzeichnet,** daß zwischen dem Querträger (4) und der Anlagefläche (11) des Gehäuses (1) eine elastische Zwischenlage (18) vorgesehen ist.

8. Airbag-Gehäuse nach Anspruch 6 und 7, **dadurch gekennzeichnet,** daß die elastischen Zwischenlagen (17, 18) mit dem Gehäuse (1) in an sich bekannter Weise formschlüssig verbunden sind.

## Claims

1. Air bag housing, in particular a housing for a front seat passenger air bag, as well as fixing thereof to a crossbeam associated with the vehicle structure below the instrument panel of a motor vehicle, characterised in that the housing (1) on its bottom side (6) is provided with at least one housing support (7) extending to an upwardly facing surface (8) of the crossbeam (4), as well as with a contact surface (11) which extends downwardly, preferably more or less vertically downwardly, and abuts against the lower region of the crossbeam (4), the support (7) is designed with one or more hook-like pins (9) for engaging in openings (10) in the upwardly facing surface (8) of the crossbeam (4), and the contact surface (11) of the housing (1) can be connected to the lower region of the crossbeam (4).

2. Air bag housing according to claim 1, characterised in that it is made in one piece by injection moulding.

3. Air bag housing according to claim 2, characterised in that a castable light metal alloy is used as the material.

4. Air bag housing according to claim 2, characterised in that an injection-mouldable plastic is used as the material.

5. Air bag housing according to claim 4, characterised in that the plastic used as the material is provided with fillers in a manner known in the art.

6. Air bag housing according to claims 1 and 2 as well as one or more of claims 3 to 5, characterised in that between the portion of the support (7) on the housing (1) which rests on the crossbeam (4) with hook-like pins (9), and the crossbeam (4) of the vehicle structure, is provided an elastic intermediate layer (17).

7. Air bag housing according to claims 1, 2 and 6, characterised in that between the crossbeam (4) and the contact surface (11) of the housing (1) is provided an elastic intermediate layer (18).

8. Air bag housing according to claims 6 and 7, characterised in that the elastic intermediate layers (17, 18) are connected to the housing (1) in form-locking relationship in a manner known in the art.

## Revendications

1. Boîtier pour coussin gonflable, notamment pour un coussin gonflable de passager avant, et fixation dudit boîtier sur une traverse associée de la structure du véhicule, en-dessous de la planche de bord d'un véhicule automobile, caractérisé par le fait que le boîtier (1) est pourvu sur son fond (6) d'au moins un support de boîtier (7) qui fait saillie en direction d'une surface (8) tournée vers le haut de la traverse (4) ainsi que d'une surface d'appui (11) appliquée contre la partie inférieure de la traverse (4), qui s'étend en direction du bas, de préférence sensiblement verticalement, par le fait que le support (7) de boîtier comporte un ou plusieurs têtons (9) formant crochets destinés à s'engager dans des ouvertures (10) dans la surface (8) tournée vers le haut de la traverse (4) et que la surface d'appui (11) du boitier (1) peut être liée à la partie inférieure de la traverse (4).

2. Boîtier pour coussin gonflable selon la revendication 1, caractérisé par le fait qu'il est fabriqué d'une pièce par moulage-injection.

3. Boîtier pour coussin gonflable selon la revendication 2, caractérisé par le fait que l'on utilise comme matériau un alliage léger moulable.

4. Boîtier pour coussin gonflable selon la revendication 2, caractérisé par le fait que l'on utilise comme matériau un matériau synthétique moulable par injection.

5. Boîtier pour coussin gonflable selon la revendication 2, caractérisé par le fait que le matériau synthétique utilisé contient de manière connue en soi des charges.

6. Boîtier pour coussin gonflable selon les revendications 1 et 2, ainsi qu'une ou plusieurs des revendication 3 à 5, caractérisé par le fait qu'une couche intermédiaire (17) élastique est prévue entre la partie du support (7) du boîtier (1) pourvue de têtons (9) formant crochets, reposant sur la traverse (4), et la traverse (4) de la structure de véhicule.

7. Boîtier pour coussin gonflable selon les revendications 1, 2 et 6, caractérisé par le fait qu'une couche intermédiaire (18) élastique est prévue entre la traverse (4) et la surface d'appui (11) du boîtier (1).

8. Boîtier pour coussin gonflable selon les revendications 6 et 7, caractérisé par le fait que les couches intermédiaires (17, 18) élastiques sont liées par obstacles, de manière connue en soi, au boîtier (1).
